# EUROPÄISCHE PATENTSCHRIFT

(11) **EP 1 239 992 B1**
(45) Veröffentlichungstag und Bekanntmachung des Hinweises auf die Patenterteilung: **14.04.2004**
(21) Anmeldenummer: 00987391.0
(22) Anmeldetag: 12.12.2000
(51) Int. Cl.: B23K 26/00

(54) **VERFAHREN UND VORRICHTUNG ZUR BEARBEITUNG VON LEICHTBAUTEILKOMPONENTEN**
METHOD AND DEVICE FOR TREATING LIGHTWEIGHT COMPONENTS
PROCEDE ET DISPOSITIF POUR TRAVAILLER SUR DES COMPOSANTS LEGERS

(30) Priorität: 21.12.1999 DE 19961773
(43) Veröffentlichungstag der Anmeldung: 18.09.2002
(73) Patentinhaber: Pfalz-Flugzeugwerke GmbH, 67346 Speyer (DE)
(72) Erfinder: MORISSE, Lutz, 67105 Schifferstadt (DE); SEFRIN, Christian, 76756 Bellheim (DE)
(74) Vertreter: Isenbruck, Günter, Dr.
(86) Internationale Anmeldenummer: PCT/EP2000/012602
(87) Internationale Veröffentlichungsnummer: WO 2001/045892

(56) Entgegenhaltungen:
- EP-A- 0 476 501
- WO-A-97/19781
- US-A- 4 032 743
- US-A- 5 531 370
- US-A- 5 609 288

## Beschreibung

Die Erfindung bezieht sich auf ein Verfahren und eine Vorrichtung zum Bearbeiten von Titan-Leichtbauteilen für die Luftfahrtindustrie, wobei die Leichtbauteile insbesondere mittels eines Laserkopfes bearbeitet werden.

Wo 97/19781 bezieht sich auf ein Schweißverfahren für Titanlegierungen, bei dem die mechanischen Eigenschaften der Schweißzone von besonderem Interesse sind, eine Versprödung in der Schweißzone zu vermeiden ist und eine erhebliche Wärmebelastung durch den Schweißprozeß auftritt. Bei diesem Schweißverfahren wird eine zum Schweißen von Titanlegierungen geeignete Schweißelektrode mittels eines Schweißbrenners zugeführt, wobei der Schweißbrenner eine Inertgaszufuhr enthält, und dieses Inertgas ein konisch verlaufendes Schild um die zum Schweißen von Titanlegierungen geeignete Elektrode legt. Gemäß dieses Schweißverfahrens wird ein Lichtbogen zwischen der Schweißelektrode und der Titanlegierung erzeugt, um ein Zusammenwachsen der Titanlegierung innerhalb des konisch verlaufenden Schildes zu erzielen. Schließlich wird der konisch verlaufende Schild von der Zone, in der die Titanlegierung zusammengewachsen ist, entfernt, wovor diese soweit abgekühlt wird, daß die Oxidation des Titanmaterials in der Zone des Zusammenwachsens ausgeschlossen ist.

US 5,531,370 bezieht sich auf ein Werkzeugsystem für hochpräzises Dimensionieren und Schneiden sowie Schweißen insbesondere für in der Raumfahrt verwendete Legierungen.

Bei diesen Verfahren des dynamischen Dimensionierens zum Aufbringen alternierender Zug- und Druckkräfte wird die Duktilität eines Endes eines Metallrohres dadurch herabgesetzt, daß dieses permanent und exakt einem Deformationsprozeß unterworfen wird. Die Metallröhren haben eine Drehachse und eine zentrale Öffnung. Gemäß diesem Verfahren wird eine Vielzahl bewegbarer, angeschrägter Rollenkörper mit der Metallröhre in Kontakt gebracht. Dabei wird die Vielzahl der bewegten angeschrägten Rollen parallel zur Längsachse der Metallröhre verschoben. Die besagte Vielzahl angeschrägter Rollen ist vorzugsweise an einer Platte aufgenommen, deren Umdrehungsachse mit der Längsachse der Metallröhre zusammenfällt. An der Platte sind die angeschrägten Rollen im äußeren Umfangsbereich aufgenommen, wobei diese die Metallröhre wiederholt unter gleichmäßigem Spannen und Entspannen aufweiten, bis die Metallröhre ihre Elastizität, sich in ihre ursprüngliche Form zurückzubilden, verloren hat.

Die Vielzahl an der Platte aufgenommener angeschrägter Rollen wird von dem Mantel der Metallröhre abgestellt, nachdem sich die gewünschte permanente Verformung der Metallröhre eingestellt hat und zwei solcherart beschaffene Metallröhren aneinander stoßen.

US 4,032,743 bildet den nächstkommenden Stand der Technik. Das Dokument hat eine Lasereinrichtung zum Gegenstand, mit denen an dünnen Folienstreifen Perforationen erzeugt werden, deren Größe im Mikrobereich liegen. Die dünnen Folienstreifen werden gemäß dieser Lösungen mit in Reihen bzw. Spalten eng zueinander benachbarter Mikroöffnungen versehen. Dazu werden eine Vielzahl von Folienstreifen in Längsrichtung parallel zu einer Achse angeordnet. Die zu bearbeitenden Folienstreifen werden an der Umfangsfläche eines kontinuierlich um seine Achse rotierenden zylindrischen Körpers angeordnet. Abwechselnd werden während der Rotation des zylindrischen Körpers um seine Achse eine Vielzahl von stationär angeordneten Lasern angesteuert, die die Mikroöffnungen in der Anzahl von Folienstreifen erzeugen. Zur Herstellung der Öffnungen in Reihen- bzw. Spaltenanordnung werden die mehreren übereinander liegenden zu bearbeitenden Folienstreifen entsprechend eines Vorschubes periodisch parallel zur Achse des zylindrischen Körpers vorgeschoben.

US 5,699,288 bezieht sich auf ein Verfahren zur Fertigung einer Wabenstruktur, die aus flächigen metallischen Ausgangsmaterialien gefertigt wird. Es werden mindestens zwei Streifen eines metallischen Werkstoffes übereinander geschichtet und an voneinander beabstandeten Stellen mittels eines Lasers werden Schweißnähte erzeugt. Nach dem Erzeugen der Schweißnähte an den ersten beiden Materialstreifen erfolgt ein Aufbringen eines weiteres metallischen Streifens. Dieser wird ebenfalls mit der Oberseite eines vorhergehenden metallischen Streifens, jedoch an unterschiedlichen Schweißpositionen verschweißt. Anschleißend wird die an bestimmten Schweißstellen miteinander gefügte Struktur expandiert, d.h. aufgeweitet, so dass eine einer Honigwabe ähnelnde metallische Struktur entsteht.

Beim thermischen Fügen Titanlegierungen enthaltender Leichtbauteile, ist die genaue Positionierung der miteinander zu verbindenden Bauteile sehr bedeutsam, um möglichst belastbare und glatte Schweißnahtverläufe zu erzielen.

Der Erfindung liegt daher die Aufgabe zugrunde, ein thermisches Fügeverfahren für Titanlegierungen enthaltende Leichtbauteile bereitzustellen, wobei die Leichtbauteile während des Fügevorgangs exakt zueinander positioniert gehalten werden.

Erfindungsgemäß wird diese Aufgabe durch die Merkmale der Ansprüche 1 und 16 gelöst. Die mit der Erfindung einhergehenden Vorteile sind vielfältiger Natur. Durch die Relativbewegung der zu bearbeitenden Leichtbauteile in Bezug auf den diese bearbeitenden Laserkopf kann der Vorschub durch Rotation des zu bearbeitenden Materials hochgenau erfolgen. Eine Bewegung eines rotations symmetrischen Bauteiles ist einfacher zu bewältigen als eine dreidimensionale Steuerung eines Laserkopfes, in dessen Arbeitsbereich eine große Wärmeentwicklung entsteht. Die entstehende Prozeßwärme kann über die zu bearbeitenden Leichtbauteilkomponenten aufnehmende, antreibbare Spannsysteme wesentlich einfacher abgeführt werden.

In besonderer Ausgestaltung des der Erfindung zugrunde liegenden Verfahrens, läßt sich der Laserkopf vorzugsweise entlang der Z-Achse auf das zu bearbeitende Material zu oder von diesem wegfahren, so daß Zustellbewegungen an die zu bearbeitenden Leichtbauteilkomponenten ausgeführt werden können. Leichtbauteilkomponenten lassen sich mittels des erfindungsgemäßen Verfahrens auf Länge zuschneiden oder auch miteinander durch Verschweißung stoffschlüssig verbinden. Bei stoffschlüssigen Verbinden der Leichtbauteilkomponenten lassen sich diese vorzugsweise an einer Stoßfuge durch eine I-förmige Schweißnaht miteinander verbinden. Anstelle einer I-Naht kann zur stoffschlüssigen Verbindung der Leichtbauteilkomponenten miteinander auch eine Kehlnaht ausgeführt werden.

Neben an einer Stoßfuge aneinander stoßenden, jeweils geraden Leichtbauteilkomponenten, die miteinander verschweißt werden können, können mittels des erfindungsgemäß vorgeschlagenen Verfahrens auch gerade und gekrümmte Bauteile bearbeitet bzw. miteinander verschweißt werden. Daneben lassen sich auch halbschalenförmige Elemente z.B. Krümmerhalbschalen miteinander verschweißen, wobei bei diesen die die stoffschlüssige Verbindung darstellende Schweißnaht in Längsrichtung verlaufend ausgeführt wird.

Mittels des erfindungsgemäßen Verfahrens lassen sich insbesondere auf die Außenfläche rotationssymmetrischer Bauteile Verstärkungsringe aufbringen, um diese mit der Außenfläche im Bereich von Überlappungsnähten durch Anheften zu verbinden.

In Längsrichtung verlaufende Schweißnähte lassen sich ebenfalls als I-Nähte ausbilden. Durch die Spannvorrichtungen, die die zu bearbeitenden Leichtbauteilkomponenten aufnehmen, kann der Innenseite der zu bearbeitenden Leichtbauteilkomponenten im Bereich des im Arbeitsbereich des Laserkopfes ein Schutzgasstrom zugeleitet werden, der gleichermaßen auch auf der Außenseite des Arbeitsbereiches des Laserkopfes zugeführt werden kann.

Die Leichtbauteilkomponenten lassen sich zuverlässig durch eine Expansion der antreibbaren Spannvorrichtungen aufweiten, was beispielsweise in Umfangsrichtung oder Längsrichtung durch Druckmittelbeaufschlagung erfolgen kann. Ferner läßt sich die Güte der jeweils zu erzeugenden stoffschlüssigen Verbindung dadurch verbessern, daß während des Bearbeitungsvorgangs des Verschweißens die zu verschweißenden Leichtbauteilkomponenten an dem Stoß- oder im Überlappungsbereich aufeinander zu gezogen werden, um die Präzision der stoffschlüssigen Verbindung durch den Laserkopf zu verbessern.

Gemäß einer erfindungsgemäß ebenfalls offenbarten Vorrichtung zum Bearbeiten von Leichtbauteilkomponenten, die Titanlegierungen enthalten, sind die die Leichtbauteilkomponente aufnehmenden Spannvorrichtungen angetrieben, so daß die an den Spannvorrichtungen jeweils aufgenommenen Leichtbauteilkomponenten in Bezug auf den Laserkopf bewegt werden; um die bei Laserschweißvorgängen notwendige Inertgasversorgung sicherzustellen, sind die Spanneinrichtungen von einem Kanalsystem durchzogen, über welches ein Schutzgasstrom an die Innenseite der an den Spannvorrichtungen aufgenommenen Leichtbauteilkomponenten gelangt. Von Außen wird ebenfalls ein Schutzgas oder Inertgasstrom in die Bearbeitungsstelle unterhalb des Laserkopfes geleitet. Durch Öffnungen, beispielsweise Umlaufnuten, gelangt der Schutzgasstrom an die Innenseite der Leichtbauteilkomponenten.

Zum Fixieren der Leichtbauteilkomponenten sind die Spanneinrichtungen in radialer Richtung expandierbar. Dadurch legen sich die Außenflächen der Spannvorrichtungen an die Innenseite der jeweils zu fixierenden Leichtbauteilkomponente an und halten diese Position. Um ein Entweichen von Schutzgas zwischen der Innenseite der jeweils fixierten Leichtbauteilkomponente und der Umfangsfläche der Spannvorrichtung zu vermeiden, sind an diesen Dichtringe angeordnet, die die Schutzgasverluste oder Inertgasverluste begrenzen. Die radiale Expansion der Spannvorrichtungen kann durch Verschieben ringförmiger Keilflächen erfolgen: deren Druckbeaufschlagung erfolgt beispielsweise über ein Hydraulikfluid. Um Zustellbewegungen der zu bearbeitenden ― d.h. längs zu schneidenden oder miteinander zu verschweißenden ― Leichtbauteilkomponenten zu vermeiden, können die Spannvorrichtung mit Federelementen versehen sein, die die Stoßfuge aneinander grenzender Leichtbauteilkomponenten in Position halten und die aneinander anstoßenden Flächen der Leichtbauteilkomponenten kontinuierlich aufeinander zuziehen. Durch die durch die Federelemente aufgebrachte ab einem bestimmten Hydraulikdruck wirkende Zugkraft wird die Genauigkeit der Positionierung der miteinander stoffschlüssig zu verbindenden Leichtbauteilkomponenten während des Bearbeitungsvorgangs aufrechterhalten.

Mit dem erfindungsgemäßen Verfahren und der erfindungsgemäßen Vorrichtung lassen sich Leichtbauteilkomponenten, Titanlegierungen enthaltend, wie beispielsweise im Flugzeugbau eingesetzte Nebenluft- oder Zusatzluftleitungen in der geforderten Qualität herstellen.

Anhand einer Zeichnung wird die Erfindung nachstehend näher erläutert.

Es zeigt:
- Fig. 1: einen Längsschnitt durch Spannvorrichtungen für Längsbeschnitt- und Überlappungsnähte,
- Fig. 2: einander gegenüberliegende Spanneinrichtungen für das Erzeugen einer Doppel-T- oder I-Naht,
- Fig. 3: Spannvorrichtungen für gerade und gekrümmte miteinander zu verbindende Leichtbauteilkomponenten,
- Fig. 4: eine Explosionszeichnung der Spanneinrichtung gemäß Fig. 3,
- Fig. 5: ein Spannsystem mit axial angeordneten Hydraulikzylindern,
- Fig. 6: ein Spannsystem für Spannvorrichtungen mit Umlenkmechanismen,
- Fig. 7: ein Aufnahmeelement für halbschalenförmige Leichtbauteilkomponenten zum Längsverschweißen
- Fig. 8: die Ansicht eines aus einzelnen Leichtbauteilkomponenten hergestellten Längs- und in Umfangsrichtung verschweißten Nebenluftrohres.

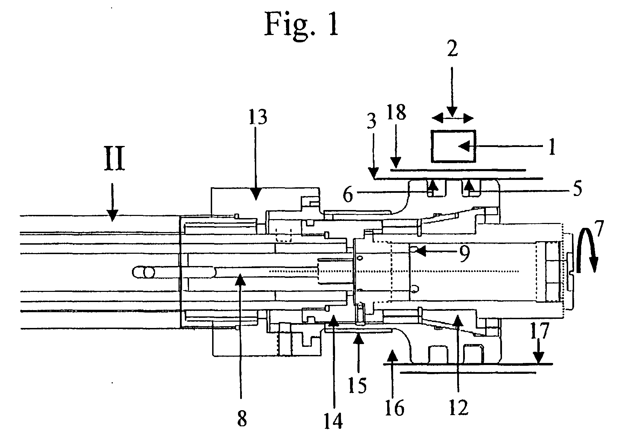

Fig. 1 zeigt einen Längsschnitt durch Spannvorrichtungen für Längsbeschnitt und die Erzeugung von Überlappungsnähten.

Ein Laserkopf 1 kann in der gemäß des Doppelpfeiles 2 angedeuteten horizontalen Ebene verfahren werden. Der Laserkopf 1 befindet sich oberhalb eines Teilrohres 3, welches eine Leichtbauteilkomponente darstellt, welche im dargestellten Ausführungsbeispiel von einem Verstärkungsring 18 umgeben ist. Die Innenseite 17 des Metallrohres 3 ist auf den Umfangsflächen einer Spanneinrichtung 4 aufgenommen. Die Umfangsfläche der Spanneinrichtung 4 ist von zwei Umfangsnuten 5 und 6 durchzogen, in welche ein Schutzgasstrom 8 mündet, der aus einem im Inneren der Spannvorrichtung 4 verlaufenden Kanalsystem austritt und die Innenseite der durch den Laserkopf jeweils zu bearbeitenden Leichtbauteilkomponente 3 mit Schutz- oder Inertgas beaufschlagt.

Der Schutzgasstrom 8 verläuft durch ein Innenrohr 10 über in der Spanneinrichtung 4 vorgesehene Öffnungen 9 in die Umfangsnuten 5, 6. Auf der Außenseite der jeweiligen durch den Laserkopf 1 zu bearbeitenden Bereiche an der Leichtbauteilkomponente 3 wird ebenfalls Schutz- oder Inertgas zugeführt, so daß beispielsweise eine I-Naht höchster Präzision erzeugt werden kann.

Am Außenrohr 11 der Spanneinrichtung 4 ist ein äußerer Haltering aufgenommen, welcher Außenrohr 11 und Innenrohr 10 umschließt. Die Spannvorrichtung 4 ist auf einem keilförmigen Element 12 aufgenommen, das über ein Druckmedium ― beispielsweise ein Hydraulikfluid ― eine Aufweitung des Umfangs der Spannvorrichtung 4 bewirkt, so daß sich die Umfangsfläche der Spannvorrichtung 4 an die Innenseite 17 der Leichtbauteilkomponente 3 anlegt und diese fixiert.

Das sich um das Innenrohr 10 bewegende Außenrohr 11 überträgt die Drehung eines Antriebes an die Spannvorrichtung 4, diese rotiert und bewegt die zu bearbeitende Fläche relativ zum Laserkopf 1, so daß nunmehr die Leichtbauteilkomponente 3 durch den Laserkopf 1 auf exaktes Längenmaß geschnitten werden kann.

Wird hingegen eine Überlappungsschweißnaht erzeugt, so wird ein Verstärkungsring 18 oberhalb der Leichtbauteilkomponente 3 befestigt; Verstärkungsring 18 und Leichtbauteilkomponente 3 werden durch Expansion der Spannvorrichtung 4 durch Beaufschlagung mittels eines Druckmediums fixiert. Danach werden die einander überlappenden Bauteile 3, 18 durch den Laserkopf 1 zunächst geheftet und dann in Umfangsrichtung als Überlappungsnaht während der Drehbewegung der fixierten Leichtbauteilkomponente 3 miteinander verschweißt.

Ob bei Längsbeschnitt oder Überlappungsnaht - stets erfolgt eine Bewegung der zu bearbeitenden Fläche relativ zum Werkzeug, hier dargestellt durch den Laserkopf 1; stets wird Schutzgas oder Inertgas sowohl an die Innenseite der Leichtbauteilkomponente 3 geführt und auch an die Außenseite in dem Bereich, in dem der Laserkopf 1 positioniert ist und die Bearbeitung des Materials vornimmt.

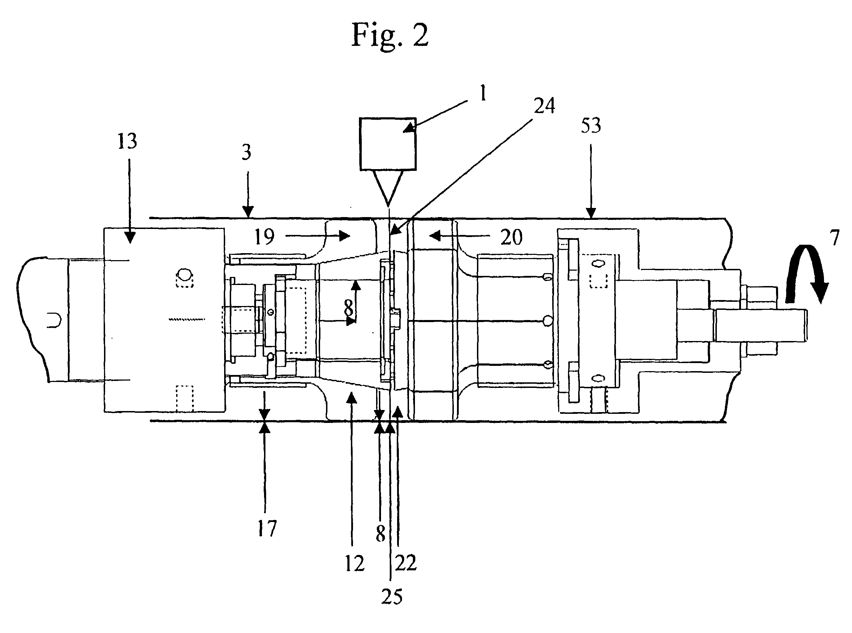

In Fig. 2 sind zwei Spannvorrichtungen dargestellt, um zwei gerade Leichtbauteilkomponenten 3, 53 derart zu positionieren, daß sie an ihrer Stoßfuge 24 aneinander stoßen und während eines Bearbeitungsvorgangs beispielsweise des Verschweißens so positioniert bleiben. Die beiden Spannvorrichtungen 19 bzw. 20 halten an ihren äußeren Umfangsflächen jeweils ein rohrförmiges Leichtbauteil 3 bzw. 53. Zwischen den Spannvorrichtungen 19, 20 ist eine Umfangsnut 23 ausgebildet, in die der Schutzgasstrom 8 mündet und so an die Innenseite 17 der durch den Laserkopf 1 auszubildenden I-Naht an der Stoßfuge 24 zu gelangen. Auch hier wird Inert- oder Schutzgas an die Außenseite der Stoßfuge 24 in den Arbeitsbereich des Laserkopfes 1 eingebracht. Die die Leichtbauteilkomponenten 3, 53 jeweils aufnehmenden Spannvorrichtungen können beispielsweise aus Federstahl gefertigt werden. Die Spannvorrichtungen 19, 20 können jedoch auch aus weicheren Metallen oder weicheren Metalllegierungen wie beispielsweise Messing bestehen.

Durch Aufbringen eines hydraulischen Druckes werden durch die axiale Bewegung der Keile 12 die Spannvorrichtungen 19, 20 in radialer Richtung aufgeweitet, so daß die Leichtbauteilkomponenten 3, 53 fixiert sind. Ab einem voreinstellbaren Druckniveau bewirkt der auf die Keile 12 einwirkende hydraulische Druck, daß ein zwischen den Spannvorrichtungen 19 bzw. 20 vorgesehenes Federelement 25 so zusammengedrückt wird, daß die beiden Spannvorrichtungen 19, 20 aufeinander zu bewegt werden. Dadurch werden die an den Umfangsflächen der jeweiligen Spannvorrichtungen 19 bzw. 20 fixierten Leichtbauteilkomponente 3, 53 aufeinander zu gezogen. Die unterhalb des Laserkopfes 1 derart positionierte Stoßfuge 24 kann nunmehr verschweißt werden, indem die beiden Spannvorrichtungen 19, 20 gedreht werden.

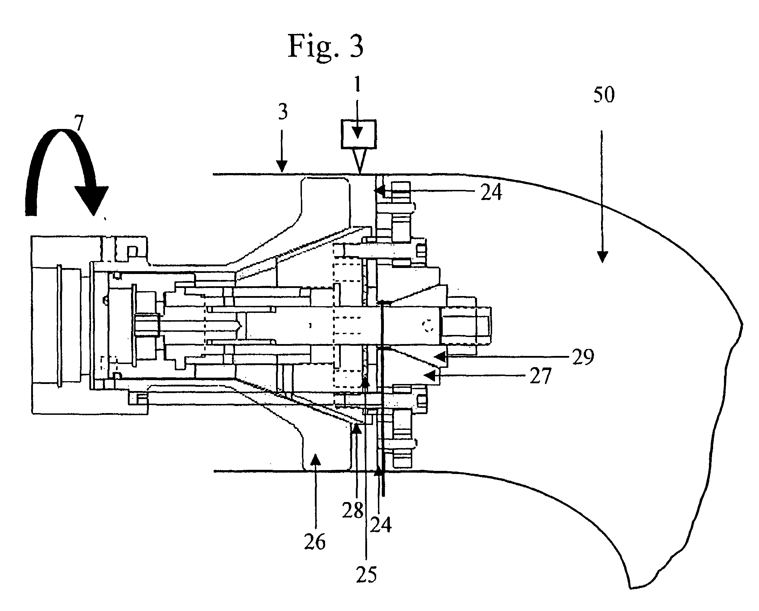

In der Darstellung gemäß Fig. 3 sind Spannvorrichtungen für gerade und gekrümmte miteinander zu verbindende Leichtbauteilkomponenten dargestellt.

Auf einer in Drehrichtung 7 verdrehbaren Spannvorrichtung 26 ist ein gerades Metallrohr 3 aufgenommen, auf der Spannvorrichtung 27 ein gekrümmter Rohrbogen 50. Die beiden Spannvorrichtungen 26, 27 sind so positioniert, daß die beiden Leichtbauteilkomponenten 3, 50 im Bereich der Stoßfuge 24 aneinander anliegen. Die Stoßfuge 24 befindet sich unterhalb des Laserkopfes 1, der Antrieb der Spannvorrichtung 26 bzw. 27 erfolgt von der Spannvorrichtung 26 aus. Durch Schaftschrauben sind die beiden Spannvorrichtungen 26, 27 miteinander verbunden, um den Drehantrieb auch an die das gekrümmte Leichtbauteil 50 aufnehmende Spannvorrichtung 27 übertragen zu können. Die Expansion der beiden Spannvorrichtungen 26, 27 erfolgt über ringförmige Spannelemente 28 bzw. 29, die mit einem hydraulisch erzeugten Druck beaufschlagt werden können. Mit der Konfiguration gemäß Fig. 3 lassen sich gerade und gekrümmte Titanlegierungen enthaltende Leichtbauteilkomponenten miteinander verschweißen; es werden bevorzugt I-Schweißnähte ausgebildet, wobei auch in dieser Ausführungsvariante die fixierten Bauteile 3, 50 unterhalb des Laserkopfes 1 mittels eines hier nicht dargestellten Antriebs verdreht werden und Schutz- oder Inertgas an die Innenseite der jeweiligen Schweiß- oder Bearbeitungsstelle sowie an deren Außenseite zugeführt wird.

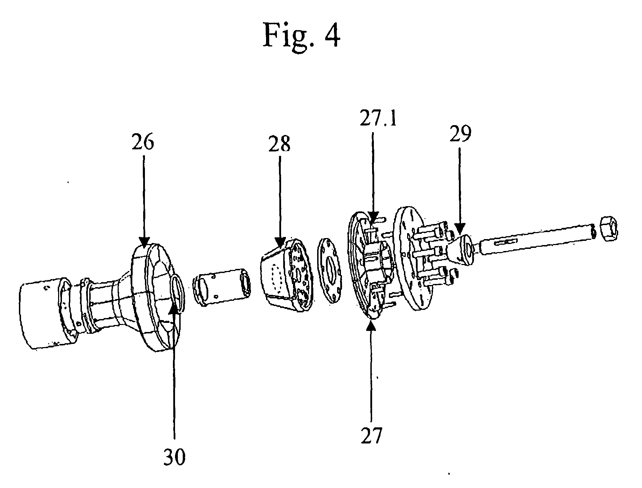

Fig. 4 zeigt eine Explosionszeichnung der Spannvorrichtung gemäß Fig. 3, jedoch ohne die Leichtbauteilkomponenten.

Aus Fig. 4 ist erkennbar, daß die beiden Spannvorrichtungen 26 bzw. 27 durch Schaftschrauben miteinander verbunden werden können, um den über die Spannvorrichtung 26 eingeleiteten Antrieb auch an die Spannvorrichtung 27 zu übertragen. Diese Spannvorrichtung kann aus mehreren Spannsegmenten 27.1 bestehen, um eine für die Aufnahme gekrümmter Werkstücke 50 notwendige größere Elastizität an der Spannvorrichtung 27 zu erzeugen. Die beiden Spannkeile oder Spannringe 28 bzw. 29 sind als ringförmige Bauteile ausgebildet, die mit einer zentrischen Bohrung in der Mitte und Anschrägungen an den Außenflächen verbunden sind.

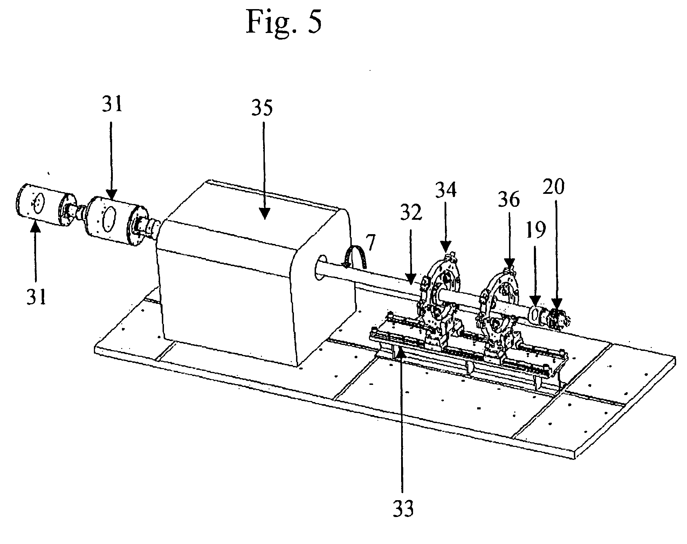

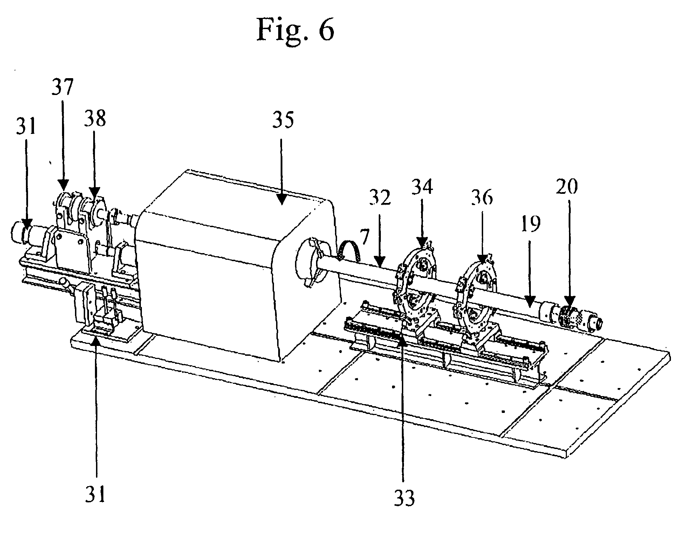

Die Figuren 5 und 6 zeigen Spannsysteme, mit koaxial angeordneten Stellzylindem und einem Stellzylinderumlenkmechanismus-System.

Fig. 5 zeigt zwei Stellzylinder 31, die koaxial zum Rohrsystem 32 angeordnet sind; über einen Drehantrieb 35 wird das Rohrsystem 32 in Drehrichtung 7 angetrieben, wobei das Rohrsystem 32 von zwei Lünetten 36 umgeben ist. An diesen können die Laserköpfe 1 aufgenommen werden. Am vorderen Ende des Rohrsystems 32 sind zwei Spannvorrichtungen 19 bzw. 20 ausgebildet, über welche zwei miteinander zu verbindende Leichtbauteilkomponenten 3, 50, 53 oder 55 in ihren jeweiligen Bearbeitungspositionen fixiert werden. Unterhalb der Lünette 36 ist mit Bezugszeichen 33 eine Lünettenführung dargestellt, an der die Lünette befestigt ist. Gemäß der eingezeichneten Doppelpfeile kann auch der Tisch, an dem die Lünettenführung 33 aufgenommen ist, vertikal oder horizontal verfahren werden, so daß Zustellbewegungen an den Laserkopf 1, der die Leichtbauteilkomponenten bearbeitet, durch die zu bearbeitenden Leichtbauteilkomponenten möglich sind.

In der Konfiguration gemäß Fig. 6 sind die beiden Zylinder 31 parallel zum Rohrsystem 32 angeordnet und stehen über eine Zugscheibe 37 und einen Umlenkhebel 38 in Verbindung mit dem Rohrsystem 32. Mittels des Drehantriebes 35 wird das Rohrsystem 32 verdreht, dessen Inneres als Leitungssystem für das Druckmedium dient, welches über die Stellzylinder 31 eine Expansion der jeweiligen Spannvorrichtung 19 bzw. 20 bewirkt. In den das Rohrsystem 32 jeweils umgebenden Lünetten 36 können die Laserköpfe 1 aufgenommen werden, mit denen sich die an den Spannvorrichtungen 19 bzw. 20 aufgenommenen Leichtbauteilkomponenten bearbeiten lassen. Auch in diesen Konfigurationen sind die Lünetten 36 an einer Lünettenführung 33 auf einer Grundplatte befestigt.

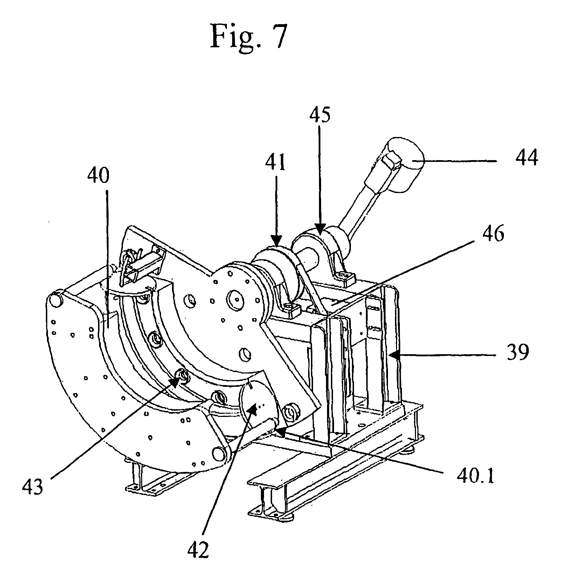

Fig. 7 zeigt eine Aufnahmevorrichtung zum Längsnahtverschweißen von halbschalenförmigen Leichtbauteilkomponenten.

Die Materialhalbschalen von Leichtbauteilkomponenten 3, 50, 53 und 55 werden in einer Aufnahme 40 positioniert und über Vakuumspanner 43 angesaugt. Die Leichtbauteilkomponenten können darüber hinaus über Zentrierbolzen 40.1 zusammengefügt und mittels Schrauben gesichert werden. Danach erfolgt eine Verdrehung der Aufnahme 40; zum Verdrehen der Aufnahme 40 dient ein Antrieb 46, der über einen Riemen 45 eine Riemenscheibe antreibt, die an der Welle der Aufnahme 40 hinter einem Stehlager 41 aufgenommen ist. Zum Ausgleich ist auf der Welle der Aufnahme 40, die das Stehlager 41 durchsetzt, ein Gegengewicht 44 aufgenommen.

Der Antrieb 46 und die Aufnahme 40 sind in einem Gestell 39 gelagert. Durch den Antrieb 46 kann eine kontinuierliche Verdrehung der Aufnahme 40 samt der in dieser fixierten Leichtbauteilkomponenten wie z.B. Krümmerhalbschalen erfolgen, so daß die innenliegende Schweißnaht gefertigt werden kann. Durch das ebenfalls an der Welle der Aufnahme 40 befestigte Gegengewicht 44 wird die Bewegung der Aufnahme 40 unterstützt, der Antrieb 46 samt Riemen 45 entlastet.

Je nachdem, ob in der Aufnahme 40 4"- oder 6"-Bauteile gefertigt werden, kann die Umlaufgeschwindigkeit am Antrieb 46 entsprechend vorgewählt werden. Am Antrieb 46 sind 4 Geschwindigkeiten vorprogrammierbar, so daß je nach Bestückung mit der entsprechenden Leichtbauteilkomponente, die entsprechenden Vorschübe einstellbar sind. Vorteilhafterweise wird in einer Drehrichtung der Aufnahme 40 die Innennaht geschweißt, bei einer der vier oben genannten Geschwindigkeiten und mit ca. 70° Winkelvorgabe. Nach Fertigung der entsprechenden Innennaht an zwei halbschalenförmigen Leichtbauteilkomponenten kann nach Umkehr der Drehrichtung 40 durch Umschaltung des Antriebs 46 und entsprechender Neuausrichtung die Außennaht gefertigt werden, die vorzugsweise als I-Schweißnaht ausgeführt werden kann.

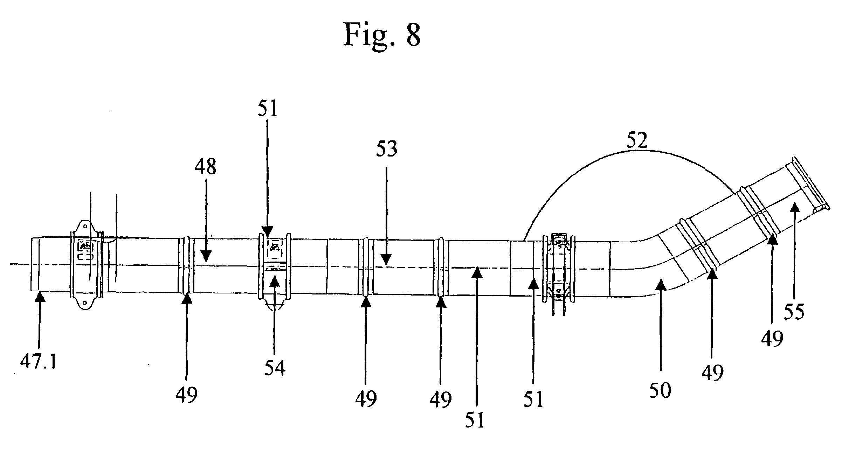

Fig. 8 zeigt ein entsprechend des erfindungsgemäßen Verfahrens und der erfindungsgemäßen Vorrichtung gefertigtes Leichtbauteil.

Das gefertigte Bauteil 47 stellt ein Nebenluftrohr dar, wie es beispielsweise bei Flugzeugen zur Nebenluftabzweigung eingesetzt werden kann. Das Nebenluftrohr 47 ist in einem Durchmesser 47.1 ausgeführt und besteht aus einzelnen miteinander verschweißten Rohrabschnitten. Es handelt sich dabei um gekrümmte Bogenelemente 50 und gerade Rohrabschnitte 53 bzw. 55, die entweder miteinander stoßverschweißt oder in Längsrichtung verschweißt sein können. Im unteren Teil von Fig. 8 ist ein Verstärkungsring 49 im Bereich einer Überlappungsnaht dargestellt, wobei das mit dem Verstärkungsring 49 versehene, sich im wesentlichen vertikal erstreckende Bauteil mit einer Längsschweißnaht 48 ausgeführt ist. Im Übergangsbereich oder Halteringbereich 54 zwischen zwei aneinandergefügten geraden Bauteilen können zwei nebeneinander liegende Überlappungsnähte 51 liegen. An den geraden Rohrabschnitt 53 schließt sich ein um den Krümmungswinkel 52 abknickender Rohrbogen 50 an, an welchen sich wiederum ein gerader Abschnitt 45 anschließt, auf den beabstandet voneinander Verstärkungsringe 49 aufgebracht sind.

An das Rohrbogenelement 50 schließt sich ein gerades Element 55 an, so daß im hier gezeigten Ausführungsbeispiel ein Rohrbogenelement 50 von zwei geraden Abschnitten 53, 55 eingegrenzt ist.

In dem jeweils von zwei umlaufenden Stegen begrenzten Übergangsbereich 54 können die Zusatzluft-/Nebenluftrohrleitungen vibrationsarm gelagert werden. Der in Fig. 8 dargestellte gekrümmte Verlauf des Bauteils 47 ist nur einer von vielen möglichen Leitungsverläufen, die sich mittels des dargestellten Verfahrens unter Einsatz der offenbarten Spanneinrichtungen herstellen lassen; das Leichtbauteil 47 kann beispielsweise aus Abschnitten 3, 50, 53 und 55 bestehen, die extrem dünnwandig ausgeführt sind, so daß sich ein relativ schnelles Verschweißen realisieren läßt. Das Leichtbauteil 47 kann daneben auch aus Reintitan (commercially pure titanium) bestehenden einzelnen Abschnitten 3, 50, 53, 55 zusammengesetzt sein und mit dem erfindungsgemäß vorgeschlagenen Verfahren und den angegebenen Vorrichtungen gefertigt werden.

### Bezugszeichenliste

- 1: Laserkopf
- 2: Bewegungsrichtung
- 3: Leichtbauteilkomponente
- 4: Spannvorrichtung
- 5: erste Umfangsnut
- 6: zweite Umfangsnut
- 7: Drehrichtung
- 8: Schutzgasstrom
- 9: Öffnung
- 10: Innenrohr
- 11: Außenrohr
- 12: Keil
- 13: äußerer Haltering
- 14: innerer Haltering
- 15: Hülse
- 16: Hohlraum
- 17: Innenseite
- 18: Ring

- 19: Spannvorrichtung
- 20: Spannvorrichtung
- 21: Fuge
- 22: Schutzgasstrom
- 23: Umfangsnut
- 24: Stoßstelle
- 25: Federelement
- 26: Spannvorrichtung gerades Bauteil
- 27: Spannvorrichtung gekrümmtes Bauteil
- 27.1: Spannsegmente
- 28: Spannkeil
- 29: Spannkeil
- 30: Dichtring

- 31: Stellzylinder
- 32: Rohrsystem
- 33: Lünettenführung
- 34: Lünette
- 35: Antrieb
- 36: Lünette

- 37: Zugscheibe
- 38: Umlenkhebel

- 39: Gestell
- 40: Aufnahme
- 40.1: Zentrierbolzen
- 41: Stehlager
- 42: Schutzgaszufuhr
- 43: Vakuumspanner
- 44: Gegengewicht
- 45: Riemen
- 46: Antrieb

- 47: Nebenluftrohr
- 47.1: Durchmesser
- 48: Längsnaht
- 49: Verstärkungsring
- 50: Bogenelement

- 51: Überlappungsnaht
- 52: Krümmungswinkel
- 53: Rohrabschnitt
- 54: Übergangsbereich (Haltebereich)
- 55: Rohrabschnitt

## Patentansprüche

1. Verfahren zum Bearbeiten von Leichtbauteilen, Titanlegierungen enthaltend, für im Flugzeugbau eingesetzte Rohrleitungskomponenten, mit einem Laser (1), der in mindestens einer Bewegungsrichtung (2) relativ zu den zu bearbeitenden Komponenten (3, 50, 53, 55) positioniert ist und die zu bearbeitenden Leichtbauteilkomponenten (4, 19, 20, 26, 27) positioniert werden, mit nachfolgenden Verfahrensschritten:
- dem Antreiben der die Leichtbauteile (3, 50, 53, 55) aufnehmenden Spannvorrichtungen (4, 19, 20, 26, 27) relativ zu einem Laserkopf (1),
- dem Ausführen von Schneid- bzw. Schweißvorgängen an den positionierten Leichtbauteilkomponenten durch den Laserkopf (1),
- dem Einspülen eines Schutzgasstromes (8) im Arbeitsbereich des Laserkopfes (1) durch Öffnungen (5, 6, 9, 23) in den Spannvorrichtungen (4, 19, 20, 26, 27) an der Innenseite (17) der Leichtbauteilkomponenten (3, 50, 53, 55) und
- dem Zuleiten eines Schutzgasstromes (8) an der Außenseite der Leichtbauteilkomponenten (3, 50, 53, 55) im Arbeitsbereich des Laserkopfes (1).

2. Verfahren gemäß Anspruch 1, **dadurch gekennzeichnet, daß** der Laserkopf (1) entlang der Z-Achse auf das zu bearbeitende Material zu- oder von diesem wegfahrbar ist.

3. Verfahren gemäß Anspruch 1, **dadurch gekennzeichnet, daß** die Leichtbauteilkomponenten (3, 50, 53, 55) auf Länge geschnitten werden.

4. Verfahren gemäß Anspruch 1, **dadurch gekennzeichnet, daß** die Leichtbauteilkomponenten (3, 50, 53, 55) an ihren Stoßfugen (24) durch den Laserkopf (1) miteinander verschweißt werden.

5. Verfahren gemäß Anspruch 4, **dadurch gekennzeichnet, daß** die Leichtbauteilkomponenten (3, 50, 53, 55) an ihrer Stoßfuge (24) mit einer 1-Naht verschweißt werden.

6. Verfahren gemäß Anspruch 4, **dadurch gekennzeichnet, daß** die Leichtbauteilkomponenten (3, 50, 53, 55) an ihrer Stoßfuge (24) mit einer Kehlnaht verschweißt werden.

7. Verfahren gemäß Anspruch 4, **dadurch gekennzeichnet, daß** an der Stoßfuge (24) gerade Leichtbauteilkomponenten (3, 53, 55) mit gekrümmten Leichtbauteilkomponenten (55) verschweißt werden.

8. Verfahren gemäß Anspruch 4, **dadurch gekennzeichnet; daß** an der Stoßfuge (24) gerade Leichtbauteilkomponenten (3) mit geraden. Leichtbauteilkomponenten (53, 55) verschweißt werden.

9. Verfahren nach Anspruch 4, **dadurch gekennzeichnet, daß** an der Stoßfuge gekrümmte Leichtbauteilkomponenten 55 mit gekrümmten Leichtbauteilkomponenten verschweißt werden.

10. Verfahren gemäß Anspruch 1, **dadurch gekennzeichnet, daß** auf der Außenseite der Leichtbauteilkomponente (3, 50, 53, 55) Verstärkungsringe (49) aufgebracht werden.

11. Verfahren gemäß Anspruch 4, **dadurch gekennzeichnet, daß** die Leichtbauteilkomponenten (3, 50, 53, 55) durch Überlappungsnähte miteinander verschweißt werden.

12. Verfahren gemäß Anspruch 4, **dadurch gekennzeichnet, daß** halbschalenformige Leichtbauteilkomponenten (3, 50, 53, 55) in Längsrichtung verschweißt werden.

13. Verfahren gemäß Anspruch 12, **dadurch gekennzeichnet, daß** die Längsnähte (48) als 1-Nähte ausgebildet werden.

14. Verfahren gemäß Anspruch 1, **dadurch gekennzeichnet, daß** die Leichtbauteilkomponenten (3, 50, 53, 55) auf den antreibbaren Spanneinrichtungen (4, 19, 20, 26, 27) durch deren Expansion fixiert werden.

15. Verfahren gemäß Anspruch 1, **dadurch gekennzeichnet, daß** die Leichtbauteilkomponenten (3, 50, 53, 55) während des Schweißens an den Stoßfugen (24) aufeinander zu gezogen werden..

16. Vorrichtung zum Bearbeiten von Leichtbauteilkomponenten (3, 50, 53, 55), Titanlegierungen enthaltend für im Flugzeugbau eingesetzte Rohrleitungskomponenten, mit einem Laserkopf (1), der in mindestens einer Richtung (2) relativ zu den zu bearbeitenden Leichtbauteilkomponenten (3, 50, 53, 55) bewegbar ist, **dadurch gekennzeichnet, dass** die die zu bearbeitenden Leichtbauteilkomponenten (3, 50, 53, 55) aufnehmenden Spannvorrichtungen (4, 19, 20, 26, 27) in Umfangsrichtung relativ zum Laserkopf (1) angetrieben sind und Kanäle (5, 6, 9, 10, 23) zur Zufuhr eines Schutzgasstromes (8) an die Innenseite (17) der Leichtbauteilkomponenten (3, 50, 53, 55) aufweisen.

17. Vorrichtung gemäß Anspruch 16, **dadurch gekennzeichnet, daß** die Spannvorrichtungen (4, 19, 20, 26, 27) ihre Abmessungen vergrößernde beaufschlagbare Expansionselemente (12, 28, 29) umfassen.

18. Vorrichtung gemäß Anspruch 16, **dadurch gekennzeichnet, dass** einander gegenüberliegend angeordnete Spannvorrichtungen (19, 20, 26, 27) mit Vorspannelementen (25) versehen sind, die die Leichtbauteilkomponenten (3, 50, 53, 55) an der Stoßfuge (24) aufeinander zu ziehen.

## Claims

1. Method of processing lightweight components, containing titanium alloys, for piping components used in aircraft construction, using a laser (1) which is positioned in at least one direction (2) of movement relative to the components (3, 50, 53, 55) to be processed, and the lightweight components (3, 50, 53, 55) to be processed are positioned by clamping devices (4, 19, 20, 26, 27), comprising the following method steps:
- driving the clamping devices (4, 19, 20, 26, 27), accommodating the lightweight components (3, 50, 53, 55), relative to a laser head (1),
- executing cutting or welding operations on the positioned lightweight components by the laser head (1),
- flushing a shielding-gas flow (8) in the working region of the laser head (1) through openings (5, 6, 9, 23) in the clamping devices (4, 19, 20, 26, 27) on the inside (17) of the lightweight components (3, 50, 53, 55), and
- feeding a shielding-gas flow (8) on the outside of the lightweight components (3, 50, 53, 55) in the working region of the laser head (1).

2. Method according to Claim 1, **characterized in that** the laser head (1) is movable along the Z axis towards or away from the material to be processed.

3. Method according to Claim 1, **characterized in that** the lightweight components (3, 50, 53, 55) are cut to length.

4. Method according to Claim 1, **characterized in that** the lightweight components (3, 50, 53, 55) are welded to one another at their joints (24) by the laser head (1).

5. Method according to Claim 4, **characterized in that** the lightweight components (3, 50, 53, 55) are welded at their joint (24) with a square butt weld.

6. Method according to Claim 4, **characterized in that** the lightweight components (3, 50, 53, 55) are welded at their joint (24) with a fillet weld.

7. Method according to Claim 4, **characterized in that** straight lightweight components (3, 53, 55) are welded at the joint (24) to curved lightweight components (50).

8. Method according to Claim 4, **characterized in that** straight lightweight components (3) are welded at the joint (24) to straight lightweight components (53, 55).

9. Method according to Claim 4, **characterized in that** curved lightweight components (50) are welded at the joint to curved lightweight components.

10. Method according to Claim 1, **characterized in that** reinforcing rings (49) are mounted on the outside of the lightweight components (3, 50, 53, 55).

11. Method according to Claim 4, **characterized in that** the lightweight components (3, 50, 53, 55) are welded to one another by lap welds.

12. Method according to Claim 4, **characterized in that** half-shell-shaped lightweight components (3, 50, 53, 55) are welded in the longitudinal direction.

13. Method according to Claim 12, **characterized in that** the longitudinal welds (48) are designed as square butt welds.

14. Method according to Claim 1, **characterized in that** the lightweight components (3, 50, 53, 55) are fixed on the drivable clamping devices (4, 19, 20, 26, 27) by the expansion of the latter.

15. Method according to Claim 1, **characterized in that** the lightweight components (3, 50, 53, 55) are drawn towards one another at the joints (24) during the welding.

16. Apparatus for processing lightweight components (3, 50, 53, 55), containing titanium alloys, for piping components used in aircraft construction, having a laser head (1) which is movable in at least one direction (2) relative to the lightweight components (3, 50, 53, 55) to be processed, **characterized in that** the clamping devices (4, 19, 20, 26, 27) accommodating the lightweight components (3, 50, 53, 55) to be processed are driven in the circumferential direction relative to the laser head (1) and have passages (5, 6, 9, 10, 23) for feeding a shielding-gas flow (8) to the inside (17) of the lightweight components (3, 50, 53, 55).

17. Apparatus according to Claim 16, **characterized in that** the clamping devices (4, 19, 20, 26, 27) comprise expansion elements (12, 28, 29) which increase their dimensions and to which pressure can be applied.

18. Apparatus according to Claim 16, **characterized in that** clamping devices (19, 20, 26, 27) arranged opposite one another are provided with preloading elements (25) which draw the lightweight components (3, 50, 53, 55) towards one another at the joint (24).

## Revendications

1. Procédé d'usinage de composants légers, contenant des alliages de titane, pour des canalisations utilisées dans le domaine aéronautique, comportant un laser (1), qui est positionné dans au moins un sens de déplacement (2) par rapport aux composants à usiner (3, 50, 53, 55), et les composants légers à usiner (4, 19, 20, 26, 27) étant positionnés, comportant les étapes de procédé suivantes consistant à :
- actionner les dispositifs de fixation (4, 19, 20, 26, 27) permettant de maintenir les composants légers (3, 50, 53, 55) par rapport à une tête laser (1),
- mettre en oeuvre, par le biais de la tête laser (1), des procédés de découpe, resp. de soudage au niveau des composants légers positionnés,
- injecter un flux de gaz protecteur (8) dans la zone de travail de la tête laser (1) par des ouvertures (5, 6, 9, 23) pratiquées dans les dispositifs de fixation (4, 19, 20, 26, 27), au niveau de la surface intérieure (17) des composants légers (3, 50, 53, 55) et
- amener un flux de gaz protecteur (8) au niveau de la surface extérieure des composants légers (3, 50, 53, 55), dans la zone de travail de la tête laser (1).

2. Procédé selon la revendication 1, **caractérisé en ce que** la tête laser (1) peut être déplacée le long de l'axe Z sur le matériau à usiner, vers ou à partir de celui-ci.

3. Procédé selon la revendication 1, **caractérisé en ce que** les composants légers (3, 50, 53, 55) sont découpés sur la longueur.

4. Procédé selon la revendication 1, **caractérisé en ce que** les composants légers (3, 50, 53, 55) sont soudés les uns avec les autres par le biais de la tête laser (1) au niveau de leurs jointures (24).

5. Procédé selon la revendication 4, **caractérisé en ce que** les composants légers (3, 50, 53, 55) sont soudés avec une soudure en I au niveau de leur jointure (24).

6. Procédé selon la revendication 4, **caractérisé en ce que** les composants légers (3, 50, 53, 55) sont soudés avec une soudure d'angle au niveau de leur jointure (24).

7. Procédé selon la revendication 4, **caractérisé en ce qu'**au niveau de la jointure (24), des composants légers rectilignes (3, 53, 55) sont soudés avec des composants légers courbes (55).

8. Procédé selon la revendication 4, **caractérisé en ce qu'**au niveau de la jointure (24), des composants légers rectilignes (3) sont soudés avec des composants légers rectilignes (53, 55).

9. Procédé selon la revendication 4, **caractérisé en ce qu'**au niveau de la jointure, des composants légers courbes (55) sont soudés avec des composants légers courbes.

10. Procédé selon la revendication 1, **caractérisé en ce que** des anneaux de renforcement (49) sont placés sur la surface extérieure des composants légers (3, 50, 53, 55).

11. Procédé selon la revendication 4, **caractérisé en ce que** les composants légers (3, 50, 53, 55) sont soudés les uns avec les autres par des soudures par recouvrement.

12. Procédé selon la revendication 4, **caractérisé en ce que** les composants légers en forme de demi-coquilles (3, 50, 53, 55) sont soudés dans la direction longitudinale.

13. Procédé selon la revendication 12, **caractérisé en ce que** les soudures longitudinales (48) sont configurées sous la forme de soudures en I.

14. Procédé selon la revendication 1, **caractérisé en ce que** les composants légers (3, 50, 53, 55) sont fixés sur les dispositifs de fixation (4, 19, 20, 26, 27) pouvant être actionnés, grâce à leur expansion.

15. Procédé selon la revendication 1, **caractérisé en ce que** les composants légers (3, 50, 53, 55), pendant le soudage, sont rapprochés les uns des autres au niveau des jointures (24).

16. Dispositif d'usinage de composants légers (3, 50, 53, 55), contenant des alliages de titane, pour des canalisations utilisées dans le domaine aéronautique, comportant une tête laser (1), mobile dans au moins un sens (2) par rapport aux composants légers à usiner (3, 50, 53, 55), **caractérisé en ce que** les dispositifs de serrage (4, 19, 20, 26, 27) permettant de maintenir les composants légers à usiner (3, 50, 53, 55) sont actionnés dans un sens périphérique par rapport à la tête laser (1) et présentent des canaux (5, 6, 9, 10, 23) permettant d'amener un flux de gaz protecteur (8) au niveau de la surface intérieure (17) des composants légers (3, 50, 53, 55).

17. Dispositif selon la revendication 16, **caractérisé en ce que** les dispositifs de serrage (4, 19, 20, 26, 27) comprennent des éléments d'expansion (12, 28, 29), qui peuvent être mis sous pression et qui augmentent leurs dimensions.

18. Dispositif selon la revendication 16, **caractérisé en ce que** des dispositifs de serrage (19, 20, 26, 27) disposés l'un en face de l'autre sont pourvus d'éléments de précontrainte (25) qui rapprochent les composants légers (3, 50, 53, 55) les uns des autres au niveau de la jointure (24).
